# EUROPÄISCHE PATENTSCHRIFT

(11) **EP 3 464 399 B1**
(45) Veröffentlichungstag und Bekanntmachung des Hinweises auf die Patenterteilung: **04.05.2022**
(21) Anmeldenummer: 17723406.9
(22) Anmeldetag: 16.05.2017
(51) Int. Cl.: C08F 222/04, C10L 1/14, C10L 1/16, C08F 8/32

(54) **COPOLYMERISAT UND SEINE VERWENDUNG ZUR VERMINDERUNG DER KRISTALLISATION VON PARAFFINKRISTALLEN IN KRAFTSTOFFEN**
COPOLYMER AND USE THEREOF FOR REDUCING CRYSTALLIZATION OF PARAFFIN CRYSTALS IN FUELS
COPOLYMÈRE ET SON UTILISATION POUR LA DIMINUTION DE LA CRISTALLISATION DE CRISTAUX DE PARAFFINE DANS DES CARBURANTS

(30) Priorität: 24.05.2016 EP 16171070
(43) Veröffentlichungstag der Anmeldung: 10.04.2019
(73) Patentinhaber: BASF SE, 67056 Ludwigshafen am Rhein (DE)
(72) Erfinder: TROETSCH-SCHALLER, Irene, 67056 Ludwigshafen (DE); GARCIA CASTRO, Ivette, 67056 Ludwigshafen (DE); SCHROERS, Michael, 67056 Ludwigshafen (DE); REBHOLZ, Uwe, 67056 Ludwigshafen (DE); FAUL, Dieter, 67056 Ludwigshafen (DE); OSWALD, Anke, 67056 Ludwigshafen (DE)
(74) Vertreter: BASF IP Association
(86) Internationale Anmeldenummer: PCT/EP2017/061680
(87) Internationale Veröffentlichungsnummer: WO 2017/202642

(56) Entgegenhaltungen:
- EP-A1- 1 857 528
- EP-A2- 0 606 055
- WO-A1-94/10267
- WO-A1-95/20056
- WO-A1-96/06902
- WO-A1-2005/097953
- WO-A1-2015/113681
- WO-A1-2016/083130
- US-A- 4 511 369
- US-A- 4 992 080

## Beschreibung

Die vorliegende Erfindung betrifft ein Copolymerisat erhältlich durch Copolymerisation von
(A) mindestens einer ungesättigten Dicarbonsäure oder deren Derivate,
(B) mindestens einem *α* -Olefin mit von mindestens 6 bis zu einschließlich 20 Kohlenstoffatomen,
mit einem molaren Einbauverhältnis von (A) : (B) von 1 : 0,5 bis 2,0
gefolgt von der Umsetzung mit mindestens einem Dialkylamin (E), wobei es sich bei den beiden Alkylresten des mindestens einen Dialkylamins (E) unabhängig voneinander um mindestens 17 bis zu 30 Kohlenstoffatome aufweisende Alkylreste handelt und wobei das molare Verhältnis von Dialkylamin (E) bezogen auf eingebaute Einheiten der Dicarbonsäure (A) im Copolymer 1,1 : 1 bis 1.9 : 1 beträgt.

Weiterhin betrifft die vorliegende Erfindung ein Verfahren zur Herstellung dieses Copolymerisates.

Weiterhin betrifft die vorliegende Erfindung die Verwendung dieses Copolymerisates zur Modifizierung der Kristallisation von Paraffinkristallen in Kraftstoffen.

Mitteldestillat-Kraftstoffe aus fossilem Ursprung, insbesondere Gasöle, Dieselöle oder leichte Heizöle, die aus Erdöl gewonnen werden, haben je nach Herkunft des Rohöls unterschiedliche Gehalte an Paraffinen. Bei tiefen Temperaturen kommt es am Trübungspunkt oder Cloud Point ("CP") zur Ausscheidung fester Paraffine. Es wird vermutet, daß bei weiterer Abkühlung die plättchenförmigen n-Paraffinkristalle eine Art von "Kartenhausstruktur" bilden und der Mitteldestillat-Kraftstoff stockt, obwohl sein überwiegender Teil noch flüssig ist. Durch die ausgefallenen n-Paraffine im Temperaturbereich zwischen Trübungspunkt (Cloud Point) und Pour Point ("PP") wird die Fließfähigkeit der Mitteldestillat-Kraftstoffe erheblich beeinträchtigt; die Paraffine verstopfen Filter und verursachen eine ungleichmäßige oder völlig unterbrochene Kraftstoffzufuhr zu den Verbrennungsaggregaten. Ähnliche Störungen treten bei leichten Heizölen auf.

Es ist seit langem bekannt, dass durch geeignete Zusätze das Kristallwachstum der n-Paraffine in Mitteldestillat-Kraftstoffen modifiziert werden kann. Gut wirksame Additive verhindern, dass Mitteldestillat-Kraftstoffe bei Temperaturen wenige Grade Celsius unterhalb der Temperatur, bei welcher die ersten Paraffinkristalle auskristallisieren, bereits fest werden. Statt dessen werden feine, gut kristallisierende, separate Paraffinkristalle gebildet, welche auch bei weiterer Absenkung der Temperatur die Filter in Kraftfahrzeugen und Heizungsanlagen passieren oder zumindest einen für den flüssigen Teil der Mitteldestillate durchlässigen Filterkuchen bilden, so dass ein störungsfreier Betrieb sichergestellt ist. Die Wirksamkeit der Fließverbesserer wird üblicherweise nach der europäischen Norm EN 116 indirekt durch Messung des Cold Filter Plugging Point ("CFPP") ausgedrückt. Als derartige Kaltfließverbesserer oder Middle Distillate Flow Improvers ("MDFI") werden beispielsweise schon seit langem Ethylen-Vinylcarboxylat-Copoly-mere, wie Ethylen-Vinylacetat-Copoly-mere ("EVA"), eingesetzt.

Die Problematik beim Kaltfließverhalten stellt sich bei Biobrennstoffölen, z.B. sogenanntem "Biodiesel", und Mischungen aus Mitteldestillat-Kraftstoffen und Biobrennstoffölen ähnlich dar. Hier können zur Verbesserung des Kaltfließverhaltens im Prinzip die gleichen Additive wie bei reinen Mitteldestillat-Kraftstoffen eingesetzt werden.

Ein Nachteil dieser Additive beim Einsatz in Mitteldestillat-Kraftstoffen liegt darin, dass die derart modifizierten Paraffinkristalle aufgrund ihrer gegenüber dem flüssigen Teil höheren Dichte dazu neigen, sich beim Lagern des Mitteldestillat-Kraftstoffes mehr und mehr am Boden des Kraftstoffbehälters, z.B. des Vorratstanks, abzusetzen. Dadurch bildet sich im oberen Behälterteil eine homogene paraffinarme Phase und am Boden eine zweiphasige paraffinreiche Schicht. Da sowohl in den Fahrzeugtanks als auch in Lager- oder Liefertanks der Mineralölhändler der Abzug des Kraftstoffes meist wenig oberhalb des Behälterbodens erfolgt, besteht die Gefahr, dass die hohe Konzentration an festen Paraffinen zu Verstopfungen von Filtern und Dosiereinrichtungen führt. Diese Gefahr wird um so größer, je weiter die Lagertemperatur die Ausscheidungstemperatur der Paraffine unterschreitet, da die ausgeschiedene Paraffinmenge mit sinkender Temperatur zunimmt. Insbesondere verstärken auch Anteile an Biodiesel diese unerwünschte Neigung des Mitteldestillat-Kraftstoffes zur Paraffinsedimentation. Durch den zusätzlichen Einsatz von Paraffindispergatoren oder Wax Anti-Settling Additiven ("WASA") können die geschilderten Probleme verringert werden.

Aus WO 95/07944 ist es bekannt, Copolymere aus einer monoethylenisch ungesättigten C₄-C₆-Dicarbonsäure oder deren Anhydrid, Oligomeren des Propens oder eines verzweigten 1-Olefins mit 4 bis 10 Kohlenstoffatomen sowie einer monoethylenisch ungesättigen Verbindung herzustellen und anschließend mit einer Aminkomponente umzusetzen. Die Produkte werden als Detergentien in Kraftstoffen eingesetzt.

Aus EP 1526167 A2 und EP 1857529 A1 ist bekannt, EVA-Copolymere im Gemisch mit Copolymeren aus Maleinsäureanhydrid und *α* -Olefinen mit 10 bis 20 C-Atomen, umgesetzt mit primären oder sekundären Aminen mit C₈- bis C₁₆-Alkylresten einzusetzen. Der Einbau der Amine erfolgt über Amid- oder Imidbindungen. Die Länge der Reste von *α* -Olefin und Alkylresten des Amins müssen dabei ein bestimmtes Verhältnis erfüllen, um als Kaltfließverbesserer für Brennstofföle geeignet zu sein. Das Verhältnis von Amin zu Anhydrid beträgt dabei bevorzugt von 1,0 bis 2,0 mol pro mol Anhydrid. Es wird ferner ausdrücklich ausgeführt, daß kürzere und längere Alkylketten als C₈ bis C₁₆ an den Aminen nicht zur Wirksamkeit der Additive beitragen.

EP 606055 A2 beschreibt Terpolymere auf Basis von *α* , *β* -ungesättigten Dicarbonsäureanhydriden, *α* , *β* -ungesättigten Verbindungen und Polyoxyalkylenethern von niederen, ungesättigten Alkoholen. In einigen Beispielen wird das so Terpolymer mit einem Dialkylaminen im Verhältnis 2 : 1 zu einpolymerisierten Anhydridgruppen umgesetzt.

Aus der nicht vorveröffentlichten Internationalen Patentanmeldung WO 2016/083130 A1 sind Copolymerisate aus den Komponenten (A), (B), (C) und optional (D) sowie (E) mit einem molaren Einbauverhältnis von (A) : (B) : (C) : (D) von 1 : 0,5 bis 2,0 : 0,5 bis 2,0 : 0 bis 0,1 bekannt. Diese Copolymere weisen somit einen hohen Gehalt an C₃- bis C₂₀-Alkylestern der Acrylsäure oder Methacrylsäure (C) auf.

Es bestand die Aufgabe, weitere Produkte zur Verfügung zu stellen, welche diese unerwünschte Neigung von Mitteldestillat-Kraftstoffen zur Paraffinsedimentation vermindern.

Die Aufgabe wird erfindungsgemäß durch das eingangs genannte Copolymerisat aus den Komponenten (A), (B) sowie (E) gelöst.

Bei dem Monomer (A) handelt es sich um mindestens eine, bevorzugt ein bis drei, besonders bevorzugt ein oder zwei und ganz besonders bevorzugt genau eine ungesättigten Dicarbonsäure oder deren Derivate.

Unter Derivaten werden dabei gemäß der vorliegenden Schrift verstanden
- die betreffenden Anhydride in monomerer oder auch polymerer Form,
- Mono- oder Dialkylester, bevorzugt Mono- oder Di-C₁-C₄-alkylester, besonders bevorzugt Mono- oder Dimethylester oder die entsprechenden Mono- oder Diethylester,
- gemischte Ester, bevorzugt gemischte Ester mit unterschiedlichen C₁-C₄-Alkyl-komponenten, besonders bevorzugt gemischte Methylethylester, sowie
- Mono- und Diamide sowie Imide, die durch Umsetzung der ungesättigten Dicarbonsäure mit primären Aminen oder sekundären Aminen, bevorzugt C₁-C₃₀-Alkylaminen
oder Di-C₁-C₃₀-Alkylaminen erhältlich sind.

Bevorzugt handelt es sich bei den Derivaten um Anhydride in monomerer Form oder Di-C₁-C₄-alkylester, besonders bevorzugt um Anhydride in monomerer Form.

In einer weiteren bevorzugte Ausführungsform handelt es sich bei den Derivaten um Di- o- der Monoamide, bevorzugt Monoamide, welche durch Umsetzung der ungesättigten Dicarbonsäure mit Dialkylaminen (E) erhältlich sind, deren Alkylrest unabhängig voneinander mindestens 17 bis zu 30 Kohlenstoffatome aufweisen.

Unter C₁-C₄-Alkyl wird im Rahmen dieser Schrift Methyl, Ethyl, *iso*-Propyl, n-Propyl, n-Butyl, *iso*-Butyl, *sek*-Butyl und *tert*-Butyl verstanden, bevorzugt Methyl und Ethyl, besonders bevorzugt Methyl.

Bei der ungesättigten Dicarbonsäure handelt es sich um solche Dicarbonsäuren bzw. deren Derivate, bei denen beide Carboxylgruppen mit der ethylenisch ungesättigten Doppelbindung konjugiert sind.

Beispiele dafür sind Maleinsäure, Fumarsäure, 2-Methylmaleinsäure, 2,3-Dimethylmaleinsäure, 2-Methylfumarsäure, 2,3-Dimethylfumarsäure, Methylenmalonsäure und Tetrahydrophthalsäure, bevorzugt um Maleinsäure und Fumarsäure und besonders bevorzugt um Maleinsäure und deren Derivate.

Insbesondere handelt es sich bei dem Monomer (A) um Maleinsäureanhydrid.

Bei dem Monomer (B) handelt es sich um mindestens ein, bevorzugt ein bis vier, besonders bevorzugt ein bis drei, ganz besonders bevorzugt ein oder zwei und insbesondere genau ein *α* -Olefin mit von mindestens 6 bis zu einschließlich 20 Kohlenstoffatomen. Die *α* -Olefine (B) weisen bevorzugt mindestens 8, besonders bevorzugt mindestens 10 Kohlenstoffatome auf. Bevorzugt weisen die *α* -Olefine (B) bis einschließlich 18, besonders bevorzugt bis einschließlich 16 und ganz besonders bevorzugt bis einschließlich 14 Kohlenstoffatome auf.

Handelt es sich bei dem Monomeren (B) um ein Gemisch von verschiedenen Olefinen, so ist bei der Bestimmung der Anzahl der Kohlenstoffatome auf das statistische Mittel der Anzahlen der Kohlenstoffatome der im Gemisch enthaltenen Olefine abzustellen. Demzufolge weist ein Gemisch aus 50 mol% C₂₂-Olefin und 50 mol% C₁₆-Olefin im statistischen Mittel 19 Kohlenstoffatome auf.

In einer bevorzugten Ausführungsform weisen jedoch im wesentlichen alle im Gemisch befindlichen *α* -Olefine die oben angegebene Anzahl von Kohlenstoffatomen auf, bevorzugt mindestens 90 mol%, besonders bevorzugt mindestens 95 mol% und ganz besonders bevorzugt mindestens 98 mol% und insbesondere 100 mol%.

Bevorzugt kann es sich bei den *α* -Olefinen um lineare oder verzweigte, bevorzugt lineare 1-Al-kene handeln.

Beispiele dafür sind 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1- Octadecen, 1-No-nadecen und 1-Eicosen, wovon 1-Decen, 1-Dodecen, 1-Tetradecen und 1-Hexadecen bevorzugt werden und 1-Dodecen besonders bevorzugt ist.

Das erfindungsgemäße Copolymerisat ist in einem ersten Schritt durch Polymerisation einer Mischung der Monomere (A) und (B) erhältlich.

Die Copolymere sind durch die üblichen Copolymerisationsverfahren wie beispielsweise Lösungsmittelpolymerisation, Emulsionspolymerisation, Fällungspolymerisation oder Massenpolymerisation, bevorzugt Lösungsmittelpolymerisation oder Massenpolymerisation erhältlich, bevorzugt werden sie über die besagten Copolymerisationsverfahren erhalten.

Man kann die Monomerkomponenten in einer ersten Herstellungsstufe in Substanz, in Emulsion oder vorzugsweise in Lösung polymerisieren. Man kann hierbei für die Monomerkomponenten jeweils eine einzelne Monomerspezies oder Mischung aus mehreren solcher Monomerspezies einsetzen. Man führt die Polymerisationsreaktion in der Regel bei Normaldruck und unter einem Schutzgas, wie Stickstoff, durch, kann aber auch bei erhöhten Drücken bis zu 25 bar, beispielsweise in einem Autoklaven, arbeiten. Die Polymerisationstemperaturen liegen in der Regel bei 50 bis 250° C, insbesondere bei 90 bis 210° C, vor allem bei 120 bis 180° C, typischerweise bei 140 bis 160° C. Als Polymerisationsreaktor eignen sich im Prinzip alle üblichen kontinuierlich oder diskontinuierlich betriebenen Apparaturen wie beispielsweise Rührkessel, Rührkesselkaskade, Rohrreaktor oder Schlaufenreaktor.

Üblicherweise wird die Polymerisation durch radikalisch zerfallende Initiatoren gestartet, hierzu eignen sich Luft oder Sauerstoff oder organischen Peroxiden und/oder Hydroperoxiden sowie organische Azoverbindungen. Als organische Peroxide bzw. Hydroperoxide kommen beispielsweise Diisopropylbenzolhydroperoxid, Cumolhydroperoxid, Methylisobutylketonperoxid, Di-tert.-butylperoxid und tert.-Butylperiisononat in Betracht. Als organische Azoverbindung ist beispielsweise Azobisisobutyronitril ("AIBN") geeignet. Weiterhin können geeignete Regler wie Thioalkohole, Aldehyde oder Ketone bei der Polymerisation mitverwendet werden.

Falls Lösungs- oder Emulsionsmittel bei der Polymerisation mitverwendet werden, kommen hierfür die üblichen hochsiedenden inerten Flüssigkeiten wie aliphatische Kohlenwasserstoffe, z.B. Heptan, Shellsol^{®} D70, Weißöl, Lampenöl), aromatische Kohlenwasserstoffe, z. B. Ethylbenzol, Diethylbenzole, Toluol, Xylole oder entsprechende technische Kohlenwasserstoffgemische wie Shellsol^{®}, Solvesso^{®} oder Solvent Naphtha, in Betracht, ferner 1,2-Cyclohexan-dicarbonsäuredialkylester, bevorzugt 1,2-Cyclohexandicarbonsäurediisononylester.

In einer zweiten Reaktionsstufe wird das so erhältliche, bevorzugt das so erhaltene Copolymer mit dem Dialkylamin (E) umgesetzt. Für die Umsetzung ist in der Regel kein Katalysator erforderlich, sondern die Umsetzung kann bei Temperaturen von 50 bis 160° C, bevorzugt 60 bis 140 und besonders bevorzugt 70 bis 120° C erfolgen. Die Reaktion kann bevorzugt in einem inerten Lösungsmittel erfolgen, bevorzugt sind die oben für die Polymerisation aufgeführten Lösungsmittel.

Bei dem Dialkylamin (E) handelt es sich um mindestens ein, bevorzugt ein oder zwei und besonders bevorzugt genau ein Dialkylamin (E), bei dessen Alkylresten es sich unabhängig voneinander um mindestens 17 bis zu 30, bevorzugt 17 bis 26, besonders bevorzugt 17 bis 24 und ganz besonders bevorzugt 17 bis 22 Kohlenstoffatome aufweisende Alkylreste handelt.

Die beiden Alkylreste können gleich oder verschieden, bevorzugt gleich sein.

Die 17 bis zu 30 Kohlenstoffatome aufweisenden Alkylreste können linear oder verzweigt, bevorzugt linear sein, wobei es sich besonders bevorzugt um n-Heptadecyl, n-Octadecyl, n-Non-adecyl, n-Eicosyl, n-Heneicosyl, n-Docosyl, Lignoceryl, Ceryl und Myricyl, und besonders besonders bevorzugt um n-Octadecyl, n-Nonadecyl und n-Eicosyl handelt.

Bevorzugte Dialkylamine (E) sind Di-n-octadecylamin, Di-n-nonadecylamin und Di-n-eicosyl-amin.

Für die Ausführungsform der vorliegenden Erfindung ist die Summe aus dem statistischen Mittel der Anzahl der Kohlenstoffatome im Monomer (B) und dem statistischen Mittel der Anzahl der Kohlenstoffatome der Alkylreste im Dialkylamin (E) mindestens 30, bevorzugt mindestens 30,5 und besonders bevorzugt mindestens 31.

Ganz besonders bevorzugt sind in dieser Ausführungsform die Kombinationen von 1-Dodecen als Monomer (B) mit Di-n-octadecylamin als Dialkylamin (E), 1-Undecen mit Di-n-nonadecyl-amin, 1-Decen mit Di-n-eicosylamin, 1-Undecen mit Di-n-octadecylamin, 1-Dodecen mit Di-n-octadecylamin, 1-Tridecen mit Di-n-octadecylamin und 1-Tetradecen mit Din-octadecylamin. Insbesondere bevorzugt sind die Kombinationen von 1-Dodecen mit Di-n-octadecylamin, 1-Do-decen mit Di-n-octadecylamin und 1-Tetradecen mit Di-n-octadecylamin, speziell die Kombination von 1-Dodecen mit Di-n-octadecylamin.

Für die Ausführungsform der vorliegenden Erfindung beträgt das molare Verhältnis von Dialkylamin (E) bezogen auf eingebaute Einheiten der Dicarbonsäure (A) im Copolymer von 1,1 : 1 bis 1,9 : 1, bevorzugt von 1,2 : 1 bis 1,8 : 1 und besonders bevorzugt von 1,3 : 1 bis 1,7 : 1.

In einer bevorzugten Ausführungsform wird das Dialkylamin so eingesetzt, daß idealisiert ein Äquivalent Dialkylamin (E) mit den eingebauten Einheiten der Dicarbonsäure (A) im Copolymer unter Bildung von Amidgruppen reagiert und ein weiteres Äquivalent Dialkylamin (E) die dabei gebildeten freien Carboxylgruppen neutralisiert.

In einer weiteren Ausführungsform kann auf die zweite Reaktionsstufe verzichtet werden, wenn das Monomer (A) bereits als Di- oder Monoamid, bevorzugt als Monoamid der ungesättigten Dicarbonsäure mit Dialkylaminen (E) eingesetzt wird.

In diesem Fall ist eine Amidierung des Copolymers aus (A) und (B) nicht mehr erforderlich, da das Monomer (A) bereits als entsprechendes Amid in die Polymerisation eingesetzt wurde. In diesem Fall können die im so erhaltenen Copolymer enthaltenen freien Carboxylgruppen noch zu 10 bis 100 mol%, bevorzugt zu 20 bis 100 mol% mit dem Dialkylamin (E) neutralisiert werden.

Das erfindungsgemäße Copolymerisat nach Umsetzung mit der Komponente (E) weist vorzugsweise ein gewichtsmittleres Molekulargewicht (M_{w}) im Bereich von 2000 bis 20.000, besonders bevorzugt von 2200 bis 10000 und ganz besonders bevorzugt von 2500 bis 8000 und insbesondere 2500 bis 6000g/mol auf (jeweils bestimmt durch Gelpermeationschromatographie gegen Polystyrol als Standard). Die Polydispersität beträgt bevorzugt bis zu 5, besonders bevorzugt 2 bis 5, ganz besonders bevorzugt 2 bis 4 und insbesondere 2 bis 3.

Das erfindungsgemäße Copolymerisat kann bevorzugt in Kraftstoffen in der Funktion als Paraffindispergator ("WASA") verwendet werden. Das erfindungsgemäße Copolymerisat entfaltet seine Wirkung als Paraffindispergator oft besonders gut erst zusammen mit den üblichen Fließverbesserern.

Unter Fließverbesserern sollen im Rahmen der vorliegenden Erfindung alle Additive verstanden werden, die die Kälteeigenschaften von Mitteldestillat-Kraftstoffen verbessern. Neben den eigentlichen Kaltfließverbesserern ("MDFI") sind dies auch Nukleatoren (vgl. auch UIImann's Encyclopedia of Industrial Chemistry, 5. Auflage, Band A16, S. 719 ff.).

Die erfindungsgemäßen Mitteldestillat-Kraftstoffe enthalten neben dem erfindungsgemäßen Copolymerisat beim Vorliegen von Kaltfließverbesserern diese in einer Menge von üblicherweise 1 bis 2000 Gew.-ppm, vorzugsweise von 5 bis 1000 Gew.-ppm, insbesondere von 10 bis 750 Gew.-ppm und vor allem von 50 bis 500 Gew.-ppm, z.B. von 150 bis 400 Gew.-ppm. Derartige Kaltfließverbesserer sind beispielsweise beschrieben in WO 2007/147753, dort besonders Seite 13, Zeile 1 bis Seite 16, Zeile 32, was hiermit durch Bezugnahme Bestandteil der vorliegenden Offenbarung sei.

Ein weiterer Gegenstand der vorliegenden Erfindung sind Brennstofföle, enthaltend 10 bis 5000 Gew.-ppm mindestens eines erfindungsgemäßen Copolymerisats und zusätzlich optional weitere Additive ausgewählt aus der Gruppe bestehend aus Kaltfließverbesserern, Paraffindispergatoren, Leitfähigkeitsverbesserern, Korrosionsschutzadditiven, Lubricity-Additiven, Antioxidantien, Metall-Deaktivatoren, Antischaummitteln, Demulgatoren, Detergentien, Cetanzahl-Verbesserern, Lösungs- oder Verdünnungsmitteln, Farbstoffen und Duftstoffen.

Bevorzugte Fließverbesserer sind Ethylen-Vinylacetat-Copolymere, wie sie in der WO 99/29748 beschrieben sind, oder Kammpolymeren, wie sie in der WO 2004/035715 beschrieben sind, und bilden zusammen mit dem erfindungsgemäßen Copolymerisat in dessen Funktion als Paraffindispergator ein effizientes und vielseitig einsetzbares Kältestabiliserungssystem für Mitteldestillat-Kraftstoffe, insbesondere für solche mit einem Anteil an Biodiesel.

Besonders bevorzugt handelt es sich bei den Fließverbesserern um Copolymere von Ethylen mit wenigstens einem weiteren ethylenisch ungesättigten Monomer, vorzugsweise ausgewählt unter Alkenylcarbonsäureestern, (Meth)Acrylsäureestern, Maleinsäuredialkylestern, Fumarsäuredialkylestern und Olefinen.

Ganz besonders bevorzugt handelt es sich bei den Fließverbesserern um Ter- oder Quaterpolymere von Ethylen und mindestens einem Alkenylcarbonsäureester sowie mit wenigstens einem weiteren ethylenisch ungesättigten Monomer, vorzugsweise ausgewählt unter (Meth)Acryl-säureestern, Maleinsäuredialkylestern, Fumarsäuredialkylestern und Olefinen.

Geeignete Olefine sind beispielsweise solche mit 3 bis 10 Kohlenstoffatomen sowie mit 1 bis 3, vorzugsweise mit 1 oder 2, insbesondere mit einer Kohlenstoff-Kohlenstoff-Doppelbindung. Im zuletzt genannten Fall kann die Kohlenstoff-Kohlenstoff-Doppelbindung sowohl terminal (α-Ole-fine) als auch intern angeordnet sein kann. Bevorzugt sind jedoch α-Ole-fine, besonders bevorzugt α-Olefine mit 3 bis 6 Kohlenstoffatomen, beispielsweise Propen, 1-Buten, 1-Penten und 1-Hexen.

Geeignete (Meth)Acrylsäureester sind beispielsweise Ester der (Meth)Acrylsäure mit C₁-bis C₁₀-Alkanolen, insbesondere mit Methanol, Ethanol, Propanol, Isopropanol, n-Butanol, sec.-Butanol, Isobutanol, tert.-Butanol, Pentanol, Hexanol, Heptanol, Octanol, 2-Ethylhexanol, Nonanol und Decanol.

Geeignete Alkenylcarbonsäureester sind beispielsweise die Vinyl- und Propenylester von Carbonsäuren mit 2 bis 20 Kohlenstoffatomen, deren Kohlenwasserstoffrest linear oder verzweigt sein kann. Bevorzugt sind hierunter die Vinylester. Unter den Carbonsäuren mit verzweigtem Kohlenwasserstoffrest sind solche bevorzugt, deren Verzweigung sich in der *α-*Position zur Carboxylgruppe befindet, wobei das *α* -Kohlenstoffatom besonders bevorzugt tertiär ist, d. h. die Carbonsäure eine sogenannte Neocarbonsäure ist. Vorzugsweise ist der Kohlenwasserstoffrest der Carbonsäure jedoch linear.

Beispiele für geeignete Alkenylcarbonsäureester sind Vinylacetat, Vinylpropionat, Vinylbutyrat, Vinyl-2-ethylhexanoat, Neopentansäurevinylester, Hexansäurevinylester, Neononansäurevinylester, Neodecansäurevinylester und die entsprechenden Propenylester, wobei die Vinylester bevorzugt sind. Ein besonders bevorzugter Alkenylcarbonsäureester ist Vinylacetat; typische hieraus resultierende Copolymere sind Ethylen-Vinylacetat-Copolymere ("EVA"), welche in großem Umfang in Dieselkraftstoffen eingesetzt werden.

Besonders bevorzugt ist das ethylenisch ungesättigte Monomer ausgewählt unter Alkenylcarbonsäureestern.

Beispiele für Maleinsäuredialkylester und Fumarsäuredialkylester sind die Methyl-, Ethyl-, n-Propyl-, iso-Propyl-, n-Butyl-, sek-Butyl-, iso-Butyl-, n-Pentyl-, n-Hexyl-, 2-Ethylhexyl- und
2-Propylheptylester der Maleinsäure bzw. Fumarsäure, wobei es sich um gemischte oder bevorzugt um gleiche Ester handelt, d.h. bei Alkylreste sind gleich.

Geeignet sind auch Copolymere, die zwei oder mehrere voneinander verschiedene Alkenylcarbonsäureester einpolymerisiert enthalten, wobei diese sich in der Alkenylfunktion und/oder in der Carbonsäuregruppe unterscheiden. Ebenfalls geeignet sind Copolymere, die neben dem/den Alkenylcarbonsäureester(n) wenigstens ein Olefin und/oder wenigstens ein (Meth)Acrylsäureester einpolymerisiert enthalten.

Das ethylenisch ungesättigte Monomer ist im Copolymer in einer Menge von vorzugsweise 1 bis 50 Mol.-%, insbesondere von 10 bis 50 Mol.-% und vor allem von 5 bis 20 Mol.-%, bezogen auf das Gesamtcopolymer, einpolymerisiert.

Die Copolymere weisen vorzugsweise ein zahlenmittleres Molekulargewicht Mₙ von 1000 bis 20.000, besonders bevorzugt von 1000 bis 10.000 und insbesondere von 1000 bis 6000 auf.

Ebenso können durch die Verwendung der erfindungsgemäßen Copolymerisate eine Reihe weitere Kraftstoffeigenschaften verbessert werden. Exemplarisch sollen hier nur die zusätzliche Wirkung als Cloud Point Depressant (CPD) oder als Booster zusammen mit einem Fließverbesserer zur weiteren Verbesserung des CFPP genannt werden.

Die erfindungsgemäßen Copolymerisate können sowohl Mitteldestillat-Kraftstoffen, die vollständig fossilen Ursprungs sind, also aus Erdöl gewonnen wurden, als auch Kraftstoffen, die neben dem auf Erdöl basierenden Anteil einen Anteil an Biodiesel enthalten, zur Verbesserung deren Eigenschaften zugesetzt werden. In beiden Fällen wird eine deutliche Verbesserung des Kaltfließverhaltens des Mitteldestillat-Kraftstoffes, d.h. eine Absenkung der CP-Werte und/oder CFPP-Werte, unabhängig von der Herkunft oder der Zusammensetzung des Kraftstoffes beobachtet. Die ausgeschiedenen Paraffinkristalle werden wirksam in der Schwebe gehalten, so dass es nicht zu Verstopfungen von Filtern und Leitungen durch sedimentiertes Paraffin kommt. Die erfindungsgemäßen Copolymerisate weisen eine gute Breitenwirkung auf und bewirkt so, dass die ausgeschiedenen Paraffinkristalle in den unterschiedlichsten Mitteldestillat-Kraftstoffen sehr gut dispergiert werden.

Gegenstand der vorliegenden Erfindung sind auch Kraftstoffe, insbesondere solche mit einem Biodiesel-Anteil, die die erfindungsgemäßen Copolymerisate enthalten.

In der Regel enthalten die Kraftstoffe oder Kraftstoffadditiv-Konzentrate noch als weitere Zusätze in hierfür üblichen Mengen Fließverbesserer (wie oben beschrieben), weitere Paraffindispergatoren, Leitfähigkeitsverbesserer, Korrosionsschutzadditive, Lubricity-Additive, Antioxidantien, Metall-Deaktivatoren, Antischaummittel, Demulgatoren, Detergentien, Cetanzahl-Verbesserer, Lösungs- oder Verdünnungsmittel, Farbstoffe oder Duftstoffe oder Gemische davon. Die vorstehend genannten weiteren Zusätze sind dem Fachmann geläufig und brauchen deshalb hier nicht weiter erläutert zu werden.

Unter Brennstoffölen sollen im Rahmen der vorliegenden Erfindung Mitteldestillat-Kraftstoffe aus fossilem, pflanzlichem oder tierischem Ursprung, Biobrennstofföle ("Biodiesel") und Mischungen aus solchen Mitteldestillat-Kraftstoffen und Biobrennstoffölen verstanden werden.

Mit Mitteldestillat-Kraftstoffen (nachfolgend auch kurz "Mitteldestillate" genannt) werden insbesondere Kraft- und Brennstoffe bezeichnet, die durch Destillation von Rohöl als erstem Verfahrensschritt gewonnen werden und im Bereich von 120 bis 450° C sieden. Solche Mitteldestillat-Kraftstoffe werden insbesondere als Dieselkraftstoff, Heizöl oder Kerosin verwendet, wobei Dieselkraftstoff und Heizöl besonders bevorzugt sind. Vorzugsweise werden schwefelarme Mitteldestillate verwendet, d.h. solche, die weniger als 350 ppm Schwefel, insbesondere weniger als 200 ppm Schwefel, vor allem weniger als 50 ppm Schwefel enthalten. In speziellen Fällen enthalten sie weniger als 10 ppm Schwefel, diese Mitteldestillate werden auch als "schwefelfrei" bezeichnet. Es handelt sich dabei im allgemeinen um Rohöldestillate, die einer hydrierenden Raffination unterworfen wurden, und daher nur geringe Anteile an polyaromatischen und polaren Verbindungen enthalten. Vorzugsweise handelt es sich um solche Mitteldestillate, die 90%-Destillationspunkte unter 370° C, insbesondere unter 360° C und in Spezialfällen unter 330° C aufweisen.

Schwefelarme und schwefelfreie Mitteldestillate können auch aus schwereren Erdölfraktionen gewonnen werden, die nicht mehr unter Atmosphärendruck destilliert werden können. Als typische Konversionsverfahren zur Herstellung von Mitteldestillaten aus schweren Erdölfraktionen seien genannt: Hydrocracken, thermisches Cracken, katalytisches Cracken, Cokerprozesse und/oder Visbreaking. Je nach Verfahrensdurchführung fallen diese Mitteldestillate schwefelarm oder schwefelfrei an oder werden einer hydrierenden Raffination unterworfen.

Vorzugsweise haben die Mitteldestillate Aromatengehalte von unter 28 Gew.-%, insbesondere unter 20 Gew.-%. Der Gehalt an Normalparaffinen beträgt zwischen 5% und 50 Gew.-%, vorzugsweise liegt er zwischen 10 und 35 Gew.-%.

Im Sinne der vorliegenden Erfindung sollen hier unter Mitteldestillat-Kraftstoffen auch solche Kraft- oder Brennstoffe verstanden werden, welche sich entweder indirekt von fossilen Quellen wie Erdöl oder Erdgas ableiten lassen oder aber aus Biomasse über Vergasung und anschließende Hydrierung hergestellt werden. Ein typisches Beispiel für einen sich indirekt von fossilen Quellen ableitenden Mitteldestillat-Kraftstoff ist der mittels Fischer-Tropsch-Synthese erzeugte GTL("gas-to-liquid")-Dieselkraftstoff. Aus Biomasse wird beispielweise über den BTL("biomass-to-liquid")-Prozess ein Mitteldestillat hergestellt, das entweder allein oder in Mischung mit anderen Mitteldestillaten als Kraft- oder Brennstoff verwendet werden kann. Zu den Mitteldestillaten gehören auch Kohlenwasserstoffe, die durch Hydrierung von Fetten und Fettölen gewonnen werden. Sie enthalten überwiegend n-Paraffine.

Die Qualitäten der Heizöle und Dieselkraftstoffe sind beispielsweise in DIN 51603 und EN 590 näher festgelegt (vgl. auch Ullmann's Encyclopedia of Industrial Chemistry, 5. Auflage, Band A12, S. 617 ff.).

Ein weiterer Gegenstand der vorliegenden Erfindung ist die Verwendung des erfindungsgemäßen Copolymerisates zur Verbesserung der Kaltfließeigenschaften von Brennstoffölen und zur Verbesserung der Filtrierbarkeit von Kaltfließverbesserer-Additiven enthaltenden Brennstoffölen.

Das erfindungsgemäße Copolymerisat kann neben seiner Verwendung in den genannten Mitteldestillat-Kraftstoffen aus fossilem, pflanzlichem oder tierischem Ursprung, die im wesentlichen Kohlenwasserstoffmischungen darstellen, auch in Biobrennstoffölen und in Mischungen aus den genannten Mitteldestillaten mit Biobrennstoffölen zur Verbesserung des Kaltfließverhaltens eingesetzt werden. Derartige Mischungen sind handelsüblich und enthalten meist die Biobrennstofföle in untergeordneten Mengen, typischerweise in Mengen von 1 bis 30 Gew.-% insbesondere von 3 bis 10 Gew.-%, bezogen auf die Gesamtmenge aus Mitteldestillat fossilen, pflanzlichem oder tierischen Ursprungs und Biobrennstofföl.

Biobrennstofföle basieren in der Regel auf Fettsäureestern, vorzugsweise im wesentlichen auf Alkylester von Fettsäuren, die sich von pflanzlichen und/oder tierischen Ölen und/oder Fetten ableiten. Unter Alkylestern werden bevorzugt Niedrigalkylester, insbesondere C₁- bis C₄-Alkyl-ester, verstanden, die durch Umesterung der in pflanzlichen und/oder tierischen Ölen und/oder Fetten vorkommenden Glyceride, insbesondere Triglyceride, mittels Niedrigalkoholen, beispielsweise Ethanol oder vor allem Methanol ("FAME"), erhältlich sind. Typische Niedrigalkylester auf Basis von pflanzlichen und/oder tierischen Ölen und/oder Fetten, die als Biobrennstofföl oder Komponenten hierfür Verwendung finden, sind beispielsweise HVO (hydrogenated vegetable oil), Sonnenblumenmethylester, Palmölmethylester ("PME"), Sojaölmethylester ("SME") und insbesondere Rapsölmethylester ("RME").

Das erfindungsgemäße Copolymerisat bewirkt eine Verminderung der Kristallisation von Paraffinkristallen in Kraftstoffen, insbesondere solchen, die Biobrennstofföle enthalten.

Die übrigen vorstehend genannten weiteren Zusätze sind im übrigen dem Fachmann geläufig und brauchen deshalb hier nicht weiter erläutert zu werden.

Die nachfolgenden Beispiele sollen die vorliegende Erfindung erläutern, ohne sie zu beschränken.

### Beispiele

### Herstellungsbeispiel 1 (MSA/Dodecen:Distearylamin 1:1:1,4)

### Schritt 1:

In einem gerührten Behälter wurden 133 g Solvesso^{®} 150 und 400 g 1-Dodecen vorgelegt. Die Vorlage wurde mit N₂ begast und auf 150° C aufgeheizt. Nach Erreichen der Temperatur wurden 233,48 g Maleinsäureanhydrid (MSA, äquimolar zu 1-Dodecen) geschmolzen bei 70 bis 90° C durch einen beheizbaren Zulauf innerhalb von 6 Stunden in die Reaktionsmischung kontinuierlich hinzugefügt.

Parallel dazu wurden innerhalb von 6 Stunden 6,46 g Di tert. Butylperoxid als Initiator der Reaktion hinzudosiert. Die Reaktionsmischung ließ man nach dem Zulaufsende von Maleinsäureanhydrid und Initiator eine Stunde bei 150° C weiter rühren, verdünnte mit weiteren 493,6 g Solvesso 150 und kühlte auf 95° C ab.

### Schritt 2:

Der Reaktionsmischung aus Schritt 1 wurden 870 g Distearylamin innerhalb von 15 min und weitere 870 g Solvesso 150 hinzugefügt. Die Mischung wurde über 4 Stunden bei 160° C gerührt. Anschließend wurde erneut 870 g Distearylamin hinzugefügt, die Reaktionsmischung auf 95 ° C abgekühlt und 1 Stunde gerührt. Anschließend wurde auf Raumtemperatur abgekühlt.

Das Reaktionsprodukt war fest und leicht gelblich, der Feststoffgehalt betrug 61 %.

### Herstellungsbeispiel 2 (MSA/Dodecen:Distearylamin 1:1:1,4)

Es wurde verfahren wie in Herstellungsbeispiel 1, mit dem Unterschied, daß der Reaktionsmischung aus Schritt 1 innerhalb von 15 min 1243 g Distearylamin und weitere 1243 g Solvesso 150 hinzugefügt wurden. Die Mischung wurde über 4 Stunden bei 160° C gerührt. Anschließend wurde erneut 497 g Distearylamin hinzugefügt, die Reaktionsmischung auf 95 ° C abgekühlt und 1 Stunde gerührt. Anschließend wurde auf Raumtemperatur abgekühlt.

### Herstellungsbeispiel 3 (Vergleich) (MSA/Dodecen:Distearylamin 1:1:2)

Es wurde verfahren wie in Herstellungsbeispiel 1, mit dem Unterschied, daß der Reaktionsmischung aus Schritt 1 innerhalb von 15 min 1243 g Distearylamin und weitere 1243 g Solvesso 150 hinzugefügt wurden. Die Mischung wurde über 4 Stunden bei 160° C gerührt. Anschließend wurde erneut 1243 g Distearylamin hinzugefügt, die Reaktionsmischung auf 95° C abgekühlt und 1 Stunde gerührt. Anschließend wurde auf Raumtemperatur abgekühlt.

### Herstellungsbeispiel 4 (Vergleich) (MSA/Dodecen/Laurylacrylat:Distearylamin 1:1:0,0106:1,4)

Es wurde verfahren wie in Herstellungsbeispiel 1, mit dem Unterschied, daß 1 Gew% Laurylacrylat bezogen auf die gesamte Copolymermenge der Vorstufe zusammen mit 1-Dodecen und Solvesso 150 vorgelegt wurde.

### Herstellungsbeispiel 5 (Vergleich) (MSA/Decen/Laurylacrylat:Distearylamin 1:1:1:2)

Es wurde verfahren wie in Herstellungsbeispiel 3, mit folgenden Unterschieden:
Statt 1-Dodecen wurde nunmehr die äquimolare Menge (bezogen auf MSA) 1-Decen und zusätzlich die äquimolare Menge (bezogen auf MSA) Laurylacrylat eingesetzt.

Das Laurylacrylat wurde wie MSA innerhalb von 6 Stunden zudosiert. Ausserdem wurde in der Vorlage statt 133 g nunmehr 400 g Solvesso 150 hinzugegeben. Am Ende des Schrittes 1 wurde nur mit 226,6 g Solvesso 150 verdünnt.

### Herstellungsbeispiel 6 (Vergleich) (MSA/Dodecen:Distearylamin:Didodecylamin 1:1:0,7:0,7)

Es wurde verfahren wie in Herstellungsbeispiel 1, mit dem Unterschied, daß in Schritt 2 nach der ersten Zugabe von 870 g Distearylamin äquimolare Mengen (bezogen auf Distearylamin) Didodecylamin hinzugefügt wurden.

### Herstellungsbeispiel 7 (Vergleich) (MSA/Dodecen/Laurylacrylat:Distearylamin 1:1:1:2)

Es wurde verfahren wie in Herstellungsbeispiel 5, mit dem Unterschied, daß statt 1-Decen äquimolare Mengen von 1-Dodecen eingesetzt werden.

### Anwendungstechnische Beispiele

In die anwendungstechnischen Beispiele wurden Dieselkraftstoffe (DK) mit den in Tabelle A angegebenen Herkunftsangaben und Kennzahlen eingesetzt.

| | DK 1 | DK 2 | DK 3 |
|---|---|---|---|
| Herkunft | Zentraleuropa | Zentraleuropa | Zentraleuropa |
| Cloud Point CP [° C] | -7 | -7 | -5 |
| CFPP [° C] | -9 | -8 | -7 |
| Dichte @15° C [kg/m3] | 839 | 840 | 833 |
| 90 Vol% - 20 Vol% [° C] | 121 | 116 | 131 |
| IBP [° C] | 172 | 166 | 170 |
| FBP [° C] | 354 | 355 | 361 |
| n-Paraffine [%] | 20,27 | 19,52 | 19,84 |

### Wirkung als Paraffindispergatoren (WASA)

In den nachfolgenden Beispielen (Tabellen 1-3) wurden die Copolymere der vorliegenden Erfindung in Gegenwart eines üblichen Fließverbessers (MDFI) auf ihre Wirkung als Paraffindispergatoren (WASA) gestestet und mit nicht erfindungsgemäßen Copolymeren verglichen.

Von den additivierten Kraftstoffproben wurden der Cloud Point (CP) nach ISO 3015 und der CFPP nach EN 116 bestimmt. Dazu wurden die additivierten Kraftstoffproben in 500 ml-Glaszylindern zur Bestimmung des Delta CP-Werts in einem Kältebad auf -16° C abgekühlt und 16 Stunden bei dieser Temperatur gelagert. Von der bei -16° C abgetrennten 20 Vol.-%-Bodenphase wurde von jeder Probe wiederum der CP nach ISO 3015 ermittelt. Je geringer die Abweichung des CP der 20 Vol.-%-Bodenphase vom ursprünglichen CP (Delta CP) der jeweiligen Kraftstoffprobe, desto besser sind die Paraffine dispergiert.

Je geringer Delta CP und je tiefer der CFPP, desto besser ist das Kaltfließverhalten eines Dieselkraftstoffs

Durch die erfindungsgemäßen Copolymere wird das Kaltfließverhalten hinsichtlich Delta CP oder CFPP oder beider Parameter verbessert.

Die Durchführung des Kurzsediment-Testes erfolgte analog der Aral-Methode QSAA FKL 027 mit folgender Modifikation:
Dieselkraftstoffe 1 und 2: Abkühlen auf -16° C und 16 Std. bei dieser Temperatur halten Dieselkraftstoff 3: Abkühlen auf -13° C und 16 Std. bei dieser Temperatur halten WASA-Formulierungen enthalten 30 Gew.% des jeweiligen Copolymers

Bei dem eingesetzten MDFI handelt es sich um eine kommerziell erhältliche Fließverbesserer-Formulierung eines Ethylen/Vinylacetat-Copolymers.

**Tabelle 1**

| DK 1; CFPP: -9° C; CP: -7° C | | | | |
|---|---|---|---|---|
| Dosierung MDFI [ppm] | WASA-Formulierung enthaltend 30 Gew% Copolymer aus Beispiel | Dosierung WASA [ppm] | CFPP [° C] | Delta CP [K] |
| | | | | |
| 200 | Beispiel 2 | 150 | -29 | 1 |
| 200 | Beispiel 1 | 150 | -31 | 0,5 |
| 200 | Vergleichsbeispiel 4 | 150 | -29 | 1,1 |
| 200 | Vergleichsbeispiel 3 | 150 | -27 | 0,9 |
| 200 | Vergleichsbeispiel 5 | 150 | -29 | 2,4 |
| 200 | Vergleichsbeispiel 6 | 150 | -26 | 7,6 |

**Tabelle 2**

| DK 2; CFPP: -8° C; CP: -7° C | | | | |
|---|---|---|---|---|
| Dosierung MDFI [ppm] | WASA-Formulierung enthaltend 30 Gew% Copolymer aus Beispiel | Dosierung WASA [ppm] | CFPP [° C] | Delta CP [K] |
| | | | | |
| 200 | Beispiel 1 | 150 | -27 | 1,3 |
| 200 | Vergleichsbeispiel 7 | 150 | -25 | 2,2 |

**Tabelle 3**

| DK 3: CFPP: -7° C; CP: -5° C | | | | |
|---|---|---|---|---|
| Dosierung MDFI [ppm] | WASA-Formulierung enthaltend 30 Gew% Copolymer aus Beispiel | Dosierung WASA [ppm] | CFPP [° C] | Delta CP [K] |
| | | | | |
| 100 | Beispiel 1 | 150 | -27 | 1,3 |
| 100 | Vergleichsbeispiel 7 | 150 | -20 | 2 |

## Patentansprüche

1. Copolymerisat erhältlich durch Copolymerisation von
(A) mindestens einer ungesättigten Dicarbonsäure oder deren Derivate,
(B) mindestens einem *α* -Olefin mit von mindestens 6 bis zu einschließlich 20 Kohlenstoffatomen,
mit einem molaren Einbauverhältnis von (A) : (B) von 1 : 0,5 bis 2,0
gefolgt von der Umsetzung mit mindestens einem Dialkylamin (E), wobei es sich bei den beiden Alkylresten des mindestens einen Dialkylamins (E) unabhängig voneinander um mindestens 17 bis zu 30 Kohlenstoffatome aufweisende Alkylreste handelt und wobei das molare Verhältnis von Dialkylamin (E) bezogen auf eingebaute Einheiten der Dicarbonsäure (A) im Copolymer 1,1 : 1 bis 1.9 : 1 beträgt.

2. Copolymerisat gemäß Anspruch 1, **dadurch gekennzeichnet, daß** Monomer (A) ausgewählt ist aus der Gruppe bestehend aus Maleinsäure, Fumarsäure, 2-Methylmaleinsäure, 2,3-Dimethylmaleinsäure, 2-Methylfumarsäure, 2,3-Dimethylfumarsäure, Methylenmalonsäure und Tetrahydrophthalsäure und deren Derivaten.

3. Copolymerisat gemäß Anspruch 1 oder 2, **dadurch gekennzeichnet, daß** Monomer (B) ausgewählt ist aus der Gruppe bestehend aus 1-Hexen, 1-Hepten, 1-Octen, 1-Nonen, 1-Decen, 1-Undecen, 1-Dodecen, 1-Tridecen, 1-Tetradecen, 1-Pentadecen, 1-Hexadecen, 1-Heptadecen, 1- Octadecen, 1-Nonadecen und 1-Eicosen

4. Copolymerisat gemäß einem der vorstehenden Ansprüche, **dadurch gekennzeichnet, daß** das molare Verhältnis von Dialkylamin (E) bezogen auf eingebaute Einheiten der Dicarbonsäure (A) im Copolymer mindestens 1,2 : 1 und bis zu 1,8 : 1 beträgt.

5. Copolymerisat gemäß einem der vorstehenden Ansprüche, **dadurch gekennzeichnet, daß** es sich bei dem Dialkylamin (E) um Di-n-octadecylamin, Di-n-nonadecylamin oder Di-n-eicosylamin handelt.

6. Copolymerisat gemäß einem der vorstehenden Ansprüche, **dadurch gekennzeichnet, daß** das molare Verhältnis von Dialkylamin (E) bezogen auf eingebaute Einheiten der Dicarbonsäure (A) im Copolymer von 1,3 : 1 bis 1,7 : 1 beträgt.

7. Copolymerisat gemäß einem der vorstehenden Ansprüche, **dadurch gekennzeichnet, daß** die Summe aus dem statistischen Mittel der Anzahl der Kohlenstoffatome im Monomer (B) und dem statistischen Mittel der Anzahl der Kohlenstoffatome der Alkylreste im Dialkylamin (E) mindestens 30 beträgt.

8. Copolymerisat gemäß einem der vorstehenden Ansprüche mit einem gewichtsmittleren Molekulargewicht (M_{w}) von 2000 bis 20.000 (bestimmt durch Gelpermeationschromatographie).

9. Verfahren zur Herstellung eines Copolymerisats gemäß einem der vorstehenden Ansprüche durch Lösungsmittelpolymerisation, Emulsionspolymerisation, Fällungspolymerisation oder Massenpolymerisation bei Polymerisationstemperaturen von 50 bis 250° C in kontinuierlich oder diskontinuierlich betriebenen Apparaturen.

10. Verwendung des Copolymerisates gemäß einem der Ansprüche 1 bis 8 zur Verminderung der Kristallisation von Paraffinkristallen in Kraftstoffen.

11. Verwendung des Copolymerisates gemäß einem der Ansprüche 1 bis 8 zur Verbesserung der Kaltfließeigenschaften von Brennstoffölen und zur Verbesserung der Filtrierbarkeit von Kaltfließverbesserer-Additiven enthaltenden Brennstoffölen.

12. Brennstofföl, enthaltend 10 bis 5000 Gew.-ppm mindestens eines Copolymerisats gemäß einem der Ansprüche 1 bis 8 und zusätzlich optional weitere Additive ausgewählt aus der Gruppe bestehend aus Kaltfließverbesserern, Paraffindispergatoren, Leitfähigkeitsverbesserern, Korrosionsschutzadditiven, Lubricity-Additiven, Antioxidantien, Metall-Deaktivatoren, Antischaummitteln, Demulgatoren, Detergentien, Cetanzahl-Verbesserern, Lösungs- oder Verdünnungsmitteln, Farbstoffen und Duftstoffen.

## Claims

1. A copolymer obtainable by copolymerization of
(A) at least one unsaturated dicarboxylic acid or derivatives thereof,
(B) at least one α-olefin having from at least 6 up to and including 20 carbon atoms,
with a molar incorporation ratio of (A):(B) of 1:0.5 to 2.0,
followed by reaction with at least one dialkylamine (E), where the two alkyl radicals in the at least one dialkylamine (E) are independently alkyl radicals having at least 17 up to 30 carbon atoms, and where the molar ratio of dialkylamine (E) based on incorporated units of the dicarboxylic acid (A) in the copolymer is 1.1:1 to 1.9:1.

2. The copolymer according to claim 1, wherein monomer (A) is selected from the group consisting of maleic acid, fumaric acid, 2-methylmaleic acid, 2,3-dimethylmaleic acid, 2-methylfumaric acid, 2,3-dimethylfumaric acid, methylenemalonic acid and tetrahydrophthalic acid and derivatives thereof.

3. The copolymer according to claim 1 or 2, wherein monomer (B) is selected from the group consisting of 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene.

4. The copolymer according to any of the preceding claims, wherein the molar ratio of dialkylamine (E) based on incorporated units of the dicarboxylic acid (A) in the copolymer is at least 1.2:1 and up to 1.8:1.

5. The copolymer according to any of the preceding claims, wherein the dialkylamine (E) is di-n-octadecylamine, di-n-nonadecylamine or di-n-eicosylamine.

6. The copolymer according to any of the preceding claims, wherein the molar ratio of dialkylamine (E) based on incorporated units of the dicarboxylic acid (A) in the copolymer is from 1.3:1 to 1.7:1.

7. The copolymer according to any of the preceding claims, wherein the sum total of the statistical average number of carbon atoms in the monomer (B) and the statistical average number of carbon atoms of the alkyl radicals in the dialkylamine (E) is at least 30.

8. The copolymer according to any of the preceding claims having a weight-average molecular weight (M_{w}) of 2000 to 20 000 (determined by gel permeation chromatography).

9. A process for preparing a copolymer according to any of the preceding claims by solvent polymerization, emulsion polymerization, precipitation polymerization or bulk polymerization at polymerization temperatures of 50 to 250°C in apparatuses operated continuously or batchwise.

10. The use of the copolymer according to any of claims 1 to 8 for reducing the crystallization of paraffin crystals in fuels.

11. The use of the copolymer according to any of claims 1 to 8 for improving the cold flow properties of fuel oils and for improving the filterability of fuel oils comprising cold flow improver additives.

12. A fuel oil comprising 10 to 5000 ppm by weight of at least one copolymer according to any of claims 1 to 8 and additionally optionally further additives selected from the group consisting of cold flow improvers, paraffin dispersants, conductivity improvers, anticorrosion additives, lubricity additives, antioxidants, metal deactivators, antifoams, demulsifiers, detergents, cetane number improvers, solvents or diluents, dyes and fragrances.

## Revendications

1. Copolymère pouvant être obtenu par copolymérisation
(A) d'au moins un acide dicarboxylique insaturé ou de dérivés de celui-ci,
(B) d'au moins une α-oléfine ayant au moins 6 et jusqu'à 20 atomes de carbone,
présentant un rapport en moles (A):(B) de 1:0,5 à 2,0,
puis réaction d'au moins une dialkylamine (E), les deux résidus alkyle de l'au moins une dialkylamine (E) étant, indépendamment l'un de l'autre, des résidus alkyle ayant au moins 17 et jusqu'à 30 atomes de carbone, et le rapport en moles de la dialkylamine (E) aux motifs structuraux de l'acide dicarboxylique (A) dans le copolymère étant de 1,1:1 à 1,9:1.

2. Copolymère selon la revendication 1, **caractérisé en ce que** le monomère (A) est choisi dans le groupe consistant en l'acide maléique, l'acide fumarique, l'acide 2-méthylmaléique, l'acide 2,3-diméthylmaléique, l'acide 2-méthylfumarique, l'acide 2,3-diméthylfumarique, l'acide méthylènemalonique et l'acide tétrahydrophtalique et les dérivés de ceux-ci.

3. Copolymère selon la revendication 1 ou 2, **caractérisé en ce que** le monomère (B) est choisi dans le groupe consistant en le 1-hexène, le 1-heptène, le 1-octène, le 1-nonène, le 1-décène, le 1-undécène, le 1-dodécène, le 1-tridécène, le 1-tétradécène, le 1-pentadécène, le 1-hexadécène, le 1-heptadécène, le 1-octadécène, le 1-nonadécène et le 1-éicosène.

4. Copolymère selon l'une des revendications précédentes, **caractérisé en ce que** le rapport en moles de la dialkylamine (E) aux motifs structuraux de l'acide dicarboxylique (A) dans le copolymère est d'au moins 1,2:1 et va jusqu'à 1,8:1.

5. Copolymère selon l'une des revendications précédentes, **caractérisé en ce que** la dialkylamine (E) est la di-n-octadécylamine, la di-n-nonadécylamine ou la di-n-éicosylamine.

6. Copolymère selon l'une des revendications précédentes, **caractérisé en ce que** le rapport en moles de la dialkylamine (E) aux motifs structuraux de l'acide dicarboxylique (A) dans le copolymère est de 1,3:1 à 1,7:1.

7. Copolymère selon l'une des revendications précédentes, **caractérisé en ce que** la somme de la moyenne statistique du nombre des atomes de carbone du monomère (B) et de la moyenne statistique du nombre des atomes de carbone des résidus alkyle de la dialkylamine (E) est d'au moins 30.

8. Copolymère selon l'une des revendications précédentes, ayant une masse moléculaire moyenne en masse (M_{w}) de 2 000 à 20 000 (déterminée par chromatographie par perméation de gel).

9. Procédé de fabrication d'un copolymère selon l'une des revendications précédentes par polymérisation dans un solvant, polymérisation en émulsion, polymérisation par précipitation ou polymérisation en masse à des températures de polymérisation de 50 à 250 °C dans des appareillages fonctionnant en continu ou en discontinu.

10. Utilisation du copolymère selon l'une des revendications 1 à 8 pour diminuer la cristallisation des cristaux de paraffine dans les carburants.

11. Utilisation du copolymère selon l'une des revendications 1 à 8 pour améliorer les propriétés d'écoulement à froid de fiouls et améliorer la filtrabilité des fiouls contenant des additifs améliorant l'écoulement à froid.

12. Fioul, contenant 10 à 5 000 ppm en poids d'au moins un copolymère selon l'une des revendications 1 à 8 et en outre éventuellement des additifs supplémentaires choisis dans le groupe consistant en les agents améliorant l'écoulement à froid, les dispersants de paraffines, les agents améliorant la conductivité, les additifs anticorrosion, les additifs améliorant l'onctuosité, les antioxydants, les désactivateurs de métaux, les antimoussants, les désémulsifiants, les détergents, les agents améliorant l'indice de cétane, les solvants ou diluants, les colorants et les arômes.
